# EUROPEAN PATENT APPLICATION

(11) **EP 4 567 572 A1**
(43) Date of publication of application: **11.06.2025**
(21) Application number: 24777712.1
(22) Date of filing: 12.03.2024
(51) Int. Cl.: G06F 3/04847, G06F 3/04817

(54) **INTERACTION METHOD AND APPARATUS, AND ELECTRONIC DEVICE AND STORAGE MEDIUM**

(30) Priority: 27.03.2023 CN 202310308479
(71) Applicant: Beijing Zitiao Network Technology Co., Ltd., Beijing 100190 (CN)
(72) Inventor: LIU, Lan, Beijing 100028 (CN); WANG, Xinjuan, Beijing 100028 (CN); WANG, Shuo, Beijing 100028 (CN)
(74) Representative: Williams, Michael David
(86) International application number: PCT/CN2024/081262
(87) International publication number: WO 2024/198922

(57) **Abstract**

Embodiments of the present disclosure provide an interaction method and apparatus, an electronic device, and a storage medium. The method includes: displaying (S110) a reminder setting panel on a media content display page, where the reminder setting panel is used for setting a rest reminder condition; and switching (S220) a current page from the media content display page to a reminder setting page in response to a first trigger operation performed on the reminder setting panel, where the reminder setting page is used for setting rest reminder information, and the rest reminder information includes the rest reminder condition.

## Description

### CROSS-REFERENCE TO RELATED APPLICATIONS

The present application claims priority to Chinese Patent Application No. 202310308479.4, filed on March 27, 2023 and entitled "INTERACTION METHOD AND APPARATUS, AND ELECTRONIC DEVICE AND STORAGE MEDIUM", which is incorporated herein by reference in its entirety.

### FIELD

Embodiments of the present disclosure relate to the field of computer technologies, and in particular, to an interaction method and apparatus, an electronic device, and a storage medium.

### BACKGROUND

At present, an increasing number of users view media content on electronic devices. Meanwhile, the users are prone to viewing abundant media content on the electronic devices for a long time, which affects the rest of the users.

In the existing interaction methods, it is cumbersome for users to set rest reminders, which reduces the interaction efficiency.

### SUMMARY

Embodiments of the present disclosure provide an interaction method and apparatus, an electronic device, and a storage medium, to simplify an operation required for setting a rest reminder and improve the interaction efficiency.

According to a first aspect, an embodiment of the present disclosure provides an interaction method, including:
displaying a reminder setting panel on a media content display page, where the reminder setting panel is used for setting a rest reminder condition; and
switching a current page from the media content display page to a reminder setting page in response to a first trigger operation performed on the reminder setting panel, where the reminder setting page is used for setting rest reminder information, and the rest reminder information includes the rest reminder condition.

According to a second aspect, an embodiment of the present disclosure further provides an interaction apparatus including:
a display module configured to display a reminder setting panel on a media content display page, where the reminder setting panel is used for setting a rest reminder condition; and
a first response module configured to switch a current page from the media content display page to a reminder setting page in response to a first trigger operation performed on the reminder setting panel, where the reminder setting page is used for setting rest reminder information, and the rest reminder information includes the rest reminder condition.

According to a third aspect, an embodiment of the present disclosure further provides an electronic device, including:
one or more processors; and
a memory configured to store one or more programs, where
the one or more programs, when executed by the one or more processors, cause the one or more processors to implement the interaction method described in the embodiments of the present disclosure.

According to a fourth aspect, an embodiment of the present disclosure further provides a computer-readable storage medium having a computer program stored thereon. The program, when executed by a processor, causes the interaction method described in the embodiments of the present disclosure to be implemented.

The embodiments of the present disclosure provide an interaction method and apparatus, an electronic device, and a storage medium. The method includes: displaying a reminder setting panel on a media content display page, where the reminder setting panel is used for setting a rest reminder condition; and switching a current page from the media content display page to a reminder setting page in response to a first trigger operation performed on the reminder setting panel, where the reminder setting page is used for setting rest reminder information, and the rest reminder information includes the rest reminder condition.

### BRIEF DESCRIPTION OF THE DRAWINGS

The foregoing and other features, advantages, and aspects of embodiments of the present disclosure become more apparent with reference to the accompanying drawings and the following detailed description of embodiments. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of an interaction method according to an embodiment of the present disclosure;
FIG. 2 is a schematic flowchart of an interaction method according to an embodiment of the present disclosure;
FIG. 3 is a schematic diagram of a reminder setting panel according to an embodiment of the present disclosure;
FIG. 4 is a schematic diagram of another reminder setting panel according to an embodiment of the present disclosure;
FIG. 5 is a schematic diagram of another reminder setting panel according to an embodiment of the present disclosure;
FIG. 6 is a schematic diagram of another reminder setting panel according to an embodiment of the present disclosure;
FIG. 7 is a schematic diagram of a reminder setting page according to an embodiment of the present disclosure;
FIG. 8 is a schematic diagram of a structure of an interaction apparatus according to an embodiment of the present disclosure; and
FIG. 9 is a schematic diagram of a structure of an electronic device according to an embodiment of the present disclosure.

### DETAILED DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed on different orders, and/or performed on parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

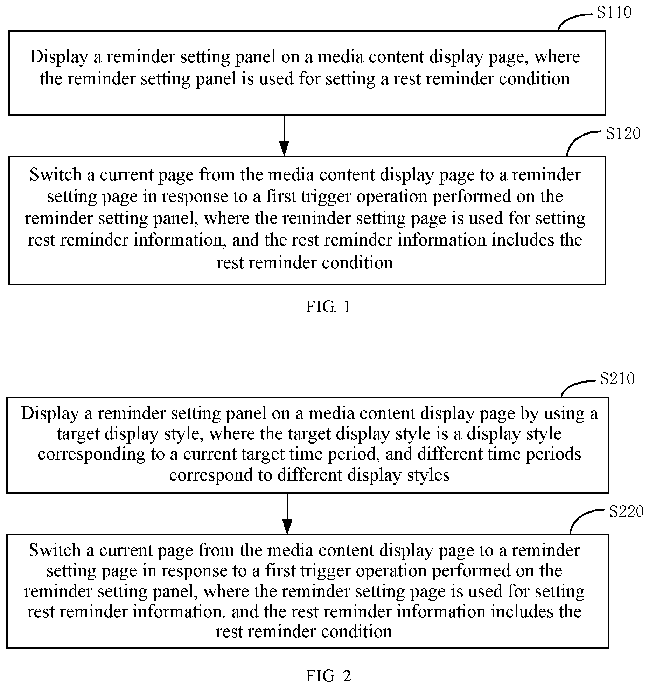

FIG. 1 is a schematic flowchart of an interaction method according to an embodiment of the present disclosure. The method is applicable to a situation where a rest reminder is set when media content is displayed on a media content display page. The method may be performed by an interaction apparatus, wherein the apparatus may be implemented by software and/or hardware, and is generally integrated into an electronic device. In this embodiment, the electronic device includes, but is not limited to: a device such as a computer, a mobile phone, or a tablet computer.

As shown in FIG. 1, an interaction method according to an embodiment of the present disclosure includes the following steps.

S110: Display a reminder setting panel on a media content display page, and the reminder setting panel is used for setting a rest reminder condition.

The media content display page may be a page displaying media content that a user is currently viewing, and the media content may be, for example, pictures, videos, and/or animated images. The reminder setting panel may be a panel which reminds the user to set the rest reminder condition and allows the user to set the rest reminder condition. A specific size and location of the reminder setting panel may be set based on an actual page situation. For example, the size of the reminder setting panel may be determined based on a size of the media content display page. The rest reminder condition may be understood as timing for making a rest reminder. For example, the timing may be a time for making a rest reminder, or an actual condition for making a rest reminder, such as after viewing a preset number of pieces of media content. After the rest reminder condition is set, a current application may remind the user to take a rest when a current condition meets the rest reminder condition set by the user.

Specifically, in this embodiment, the reminder setting panel may be displayed on the media content display page to prompt the user to set the rest reminder condition, such that the user can take a proper rest. A specific display style for displaying the reminder setting panel is not limited. For example, the display style may be different depending on display timing, or the reminder setting panel may be randomly displayed in different styles, or the reminder setting panel may be displayed based on user settings.

Further, the display timing of the reminder setting panel is not limited. For example, the reminder setting panel may be displayed based on the number of pieces of media content viewed by the user or accumulated viewing duration, or the reminder setting panel may be displayed by calculating a fatigue level of the user, or the display of the reminder setting panel may be triggered by combining the above two situations. A specific approach for calculating the fatigue level will not be described in further detail in this embodiment.

In an embodiment, the reminder setting panel is displayed when a preset display condition is met, and the preset display condition includes that the rest reminder condition in a current target time period has not been set by a current user.

The preset display condition may be a display condition that is set in advance. For example, the preset display condition may include a situation where the rest reminder condition in the current target time period has not been set by the current user. The target time period may be set by configuration personnel based on a requirement. For example, the target time period may include a day time period and a night time period, or may include a morning time period, an afternoon time period, and a night time period, where the night time period may be further divided into an evening time period and a late night time period. Specific moments of each time period may be flexibly set, which is not further limited in this embodiment. In addition, the preset display condition may further include other conditions, such as the number of pieces of media content viewed by the user, accumulated usage duration of the current application by the user in a preset period, and/or the fatigue level of the user reaching a preset fatigue level threshold.

In an implementation, if the rest reminder condition in the current target time period has not been set by the current user, the reminder setting panel may be displayed on the media content display page based on an actual situation of the user viewing the media content.

In an implementation, if the rest reminder condition in the current target time period has been set by the current user, the user may be reminded for a rest based on the rest reminder condition set by the user.

In an implementation, after the reminder setting panel is displayed on the media content display page, the user may set the rest reminder condition on the reminder setting panel, and may further perform a trigger operation on the reminder setting panel to set the rest reminder condition on another panel or page, or to further set information in addition to the rest reminder condition.

S120: Switch a current page from the media content display page to a reminder setting page in response to a first trigger operation performed on the reminder setting panel, where the reminder setting page is used for setting rest reminder information, and the rest reminder information includes the rest reminder condition.

The first trigger operation may be an operation of switching the current page from the media content display page to the reminder setting page. For example, the first trigger operation may be an operation of clicking a control on the reminder setting panel, or an operation of performing a specific gesture on the reminder setting panel, which is not limited in this embodiment.

In an embodiment, a setting page display control is displayed on the reminder setting panel, and the setting page display control is used for performing the first trigger operation.

In an implementation, the setting page display control may be displayed on the reminder setting panel for the user to perform the first trigger operation, where a display manner and location of the setting page display control are not limited. For example, the setting page display control may be displayed in the form of text on the reminder setting panel, or may be displayed in the form of a preset pattern on the reminder setting panel, and the preset pattern may be set by the configuration personnel. The display location of the setting page display control may be determined based on an actual panel situation of the reminder setting panel.

The reminder setting page may be considered as a page for setting the rest reminder information, and the rest reminder information may indicate information for setting the rest reminder. For example, the rest reminder information may include the rest reminder condition, or may include a rest reminder style, etc. The rest reminder style means a style for reminding the user to take a rest, and may include, for example, different pictures, page colors, script content, and/or audio.

In this embodiment, the reminder setting panel may be used for the user to set a simple rest reminder condition. For example, a specific number of reminder setting options may be displayed on the reminder setting panel for the user to select. In this case, when there is no reminder setting option that the user wants to select on the reminder setting panel, or when the user wants to set other rest reminder information that cannot be set on the reminder setting panel, the first trigger operation may be performed to switch to the reminder setting page to set the rest reminder information.

Specifically, in this embodiment, the current page may be switched from the media content display page to the reminder setting page in response to the first trigger operation performed on the reminder setting panel, such that the user can set the rest reminder information. After the setting succeeds based on the reminder setting panel or the reminder setting page, the user is reminded to take a rest by using a corresponding reminder style when the rest reminder condition is met. For example, for a situation where the user does not set a rest reminder style, a reminder may be made based on a default reminder style. Alternatively, when the user sets a rest reminder style, a reminder is made by using the rest reminder style set by the user.

Further, the reminder setting page may also be different depending on trigger timing of the first trigger operation.

In an embodiment, the switching a current page from the media content display page to a reminder setting page includes:
switching the current page from the media content display page to the reminder setting page corresponding to a current target time period, where the reminder setting page corresponding to the current target time period is used for setting the rest reminder information in the target time period.

The target time period may be considered as a time period to which a moment when the first trigger operation is received belongs, i.e., a current time period. Reminder setting pages corresponding to different time periods may be different.

In an implementation, different time periods may correspond to different reminder setting pages, and the different reminder setting pages are used for setting rest reminder information in the time periods corresponding thereto, i.e., the reminder setting page corresponding to the current target time period may be used for setting the rest reminder information in the target time period.

Specifically, a manner of switching the current page from the media content display page to the reminder setting page may be: switching the current page from the media content display page to the reminder setting page corresponding to the current target time period. For example, reminder setting pages corresponding to different time periods differ in content, such as script and a style of setting the rest reminder condition.

In an embodiment, after the switching a current page from the media content display page to a reminder setting page, the method further includes:
switching the current page from the reminder setting page to the media content display page in response to a second trigger operation performed on the reminder setting page.

The second trigger operation may be an operation of switching the current page from the reminder setting page to the media content display page. For example, the second trigger operation may be an operation of clicking a control on the reminder setting page, or an operation of performing a specific gesture on the reminder setting page, such as an operation of triggering a return.

In an implementation, after the current page is switched from the media content display page to the reminder setting page, the current page may be switched from the reminder setting page to the media content display page in response to the second trigger operation performed on the reminder setting page, such that the user continues to view the media content on the media content display page, and the user is reminded to take a rest by using a corresponding reminder style when the rest reminder condition is met.

In an embodiment, the switching the current page from the reminder setting page to the media content display page includes:
displaying target media content or media content next to the target media content on the media content display page, where the target media content is media content displayed on the media content display page when the first trigger operation is received.

The target media content may be considered as the media content displayed on the media content display page when the first trigger operation is received.

In an implementation, after the current page is switched from the reminder setting page to the media content display page, the target media content or the media content next to the target media content may be displayed on the media content display page. For a situation where the target media content is displayed, the target media content may continue to be displayed or may be redisplayed.

According to an interaction method provided in this embodiment of the present disclosure, a reminder setting panel is displayed on a media content display page, where the reminder setting panel is used for setting a rest reminder condition; and a current page is switched from the media content display page to a reminder setting page in response to a first trigger operation performed on the reminder setting panel, where the reminder setting page is used for setting rest reminder information, and the rest reminder information includes the rest reminder condition. According to this method, it is possible to switch to the reminder setting page in response to the first trigger operation performed on the reminder setting panel, so as to set the rest reminder information on the reminder setting page, thereby simplifying an operation required for entering the reminder setting page to set the rest reminder information, and improving the interaction efficiency.

In an embodiment, a reminder setting option is displayed on the reminder setting panel, and after the displaying a reminder setting panel on a media content display page, the method further includes:
using, in response to a setting confirmation operation performed on the reminder setting panel, a reminder condition corresponding to the reminder setting option displayed on the reminder setting panel as the rest reminder condition for a current user in a current target time period.

The reminder setting option may be considered as an option for the user to set as the rest reminder condition, and may be determined in advance by the configuration personnel. A manner of determining the reminder setting option is not limited. For example, the reminder setting option may be determined by the configuration personnel based on empirical values, or may be configured through statistical analysis of rest reminder conditions set by most users. The setting confirmation operation may be an operation of confirming the setting of the rest reminder condition, such as an operation of clicking a confirm control.

In an implementation, one reminder setting option may be displayed on the reminder setting panel, and the current user may select whether to use the reminder condition corresponding to this reminder setting option as the rest reminder condition in the current target time period. If the current user performs the setting confirmation operation, it may be considered that the current user selects to use the reminder condition corresponding to this reminder setting option as the rest reminder condition. Then, in this embodiment, in response to the setting confirmation operation, the reminder condition corresponding to the reminder setting option displayed on the reminder setting panel may be used as the rest reminder condition for the current user in the current target time period, and the user is reminded to take a rest when the rest reminder condition is met. Based on this, an interaction operation is further simplified and the interaction efficiency is improved by displaying one reminder setting option on the reminder setting panel for the current user to set the rest reminder condition.

After the displaying a reminder setting panel on a media content display page, the method further includes:

In an embodiment, at least two reminder setting options are displayed on the reminder setting panel, and after the displaying a reminder setting panel on a media content display page, the method further includes:
using, in response to a setting confirmation operation performed on the reminder setting panel, a reminder condition corresponding to a reminder setting option that is selected by a current user on the reminder setting panel as the rest reminder condition for the current user in a current target time period.

In an implementation, at least two reminder setting options may be displayed on the reminder setting panel, such that the current user can select to use a reminder condition corresponding to a specific reminder setting option as the rest reminder condition in the current target time period. It can be considered that, when the current user selects to use a reminder condition corresponding to a reminder setting option as the rest reminder condition, a state of the reminder setting option may be a selected state to distinguish the state from a state of an unselected reminder setting option. A manner for the current user to select a reminder setting option is not limited. For example, the reminder setting option may be selected in a click-to-select manner, or by sliding, through a slider, a time slide bar that includes a plurality of reminder setting options.

Further, if the current user performs the setting confirmation operation with a reminder setting option selected, in this embodiment, in response to the setting confirmation operation, the reminder condition corresponding to the reminder setting option that is selected by the current user on the reminder setting panel is used as the rest reminder condition for the current user in the current target time period, and the user is reminded to take a rest when the rest reminder condition is met. Based on this, the interaction operation is further simplified and the interaction efficiency is improved by displaying at least two reminder setting options on the reminder setting panel for selection by the current user as the rest reminder condition in the current target time period.

FIG. 2 is a schematic flowchart of an interaction method according to an embodiment of the present disclosure. The solution in this embodiment may be combined with one or more optional solutions in the above embodiments. Optionally, the displaying a reminder setting panel on a media content display page includes: displaying the reminder setting panel on the media content display page by using a target display style, where the target display style is a display style corresponding to a current target time period, and different time periods correspond to different display styles. As shown in FIG. 2, the method includes:
S210: Display the reminder setting panel on the media content display page by using a target display style, where the target display style is a display style corresponding to a current target time period, and different time periods correspond to different display styles.

The target display style may be a display style corresponding to the current target time period, that is, different time periods may correspond to the same or different display styles. The display style may include a plurality of options, such as a panel background, display script, and/or a display pattern. The display script may be script on the reminder setting panel. For example, the display script corresponding to different time periods may be different. The display pattern may be a pattern on the reminder setting panel, such as the presence or absence of a widget, or different pattern styles.

In an embodiment, the display style includes at least one of a panel background and a display animation.

The panel background may be a background of the reminder setting panel, which may include, for example, a color and/or a background style. The display animation may be an animation of displaying the reminder setting panel. For example, the reminder setting panel or a pattern in the reminder setting panel is displayed in a dynamic effect.

In an implementation, panel backgrounds for reminder setting panels corresponding to different time periods may be different. For example, the panel background corresponding to the day time period may be in a warm background color, and the panel background corresponding to the night time period may be in a dark background color.

In an implementation, display animations for reminder setting panels corresponding to different time periods may be different. For example, the display animation corresponding to the day time period may be a steaming cup of tea, and the display animation corresponding to the night time period may be a dynamically displayed moon or star.

S220: Switch a current page from the media content display page to a reminder setting page in response to a first trigger operation performed on the reminder setting panel, where the reminder setting page is used for setting rest reminder information, and the rest reminder information includes the rest reminder condition.

According to an interaction method provided in this embodiment of the present disclosure, the reminder setting panel is displayed on the media content display page by using a target display style, where the target display style is a display style corresponding to a current target time period, and different time periods correspond to different display styles; and a current page is switched from the media content display page to a reminder setting page in response to a first trigger operation performed on the reminder setting panel, where the reminder setting page is used for setting rest reminder information, and the rest reminder information includes the rest reminder condition. According to this method, the reminder setting panel is displayed by using different display styles for different time periods, such that the reminder setting panels corresponding to the different time periods can be distinguished, thereby diversifying the display styles of the reminder setting panel.

It can be considered that the existing interaction methods lack depth in describing rest reminder scenarios, for example, there is no significant distinction between a day mode and a night mode, which reduces the interaction experience of a user. In addition, an interaction operation is complicated. For example, the user can only adjust the time by dragging a progress bar, with no shortcut setting option available for click-to-select setting, which reduces the interaction efficiency.

However, in the interaction method provided in this embodiment of the present disclosure, rest reminder setting may be triggered by collecting accumulated usage duration by the user and in combination with calculation of a fatigue level. Depending on the usage duration and the fatigue level of the user, different reminder styles and script may be used, to improve the interaction experience.

In addition, based on a reminder setting option, a function of a click-to-select shortcut operation is added, to improve the interaction efficiency. In addition, in this embodiment, configurable capabilities such as trigger timing, visual materials, and script may further be reserved, to improve the personalized experience of the user.

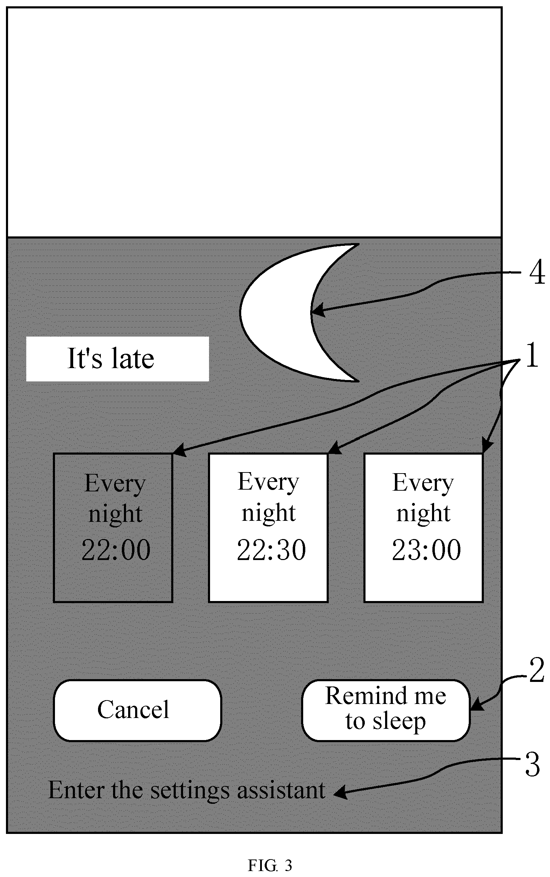

FIG. 3 is a schematic diagram of a reminder setting panel according to an embodiment of the present disclosure. As shown in FIG. 3, the reminder setting panel is displayed on the media content display page by using a display style corresponding to the night time period, where three reminder setting options 1 are displayed on the reminder setting panel. When it is detected that the user triggers a control 2 on the reminder setting panel, it may be considered that the user performs the setting confirmation operation. Then, in this embodiment, in response to the setting confirmation operation, the reminder condition corresponding to the reminder setting option (i.e., "22:00 every night") that is selected by the current user on the reminder setting panel may be used as the rest reminder condition for the current user in the current target time period. After the setting succeeds, a pop-up window indicating a setting success may further be displayed on the current page, such as a rest reminder "Remind you to take a rest every X" or a sleep reminder "Remind you to sleep at X every night". Meanwhile, a state of the reminder setting page changes accordingly, to ensure that a reminder function can be enabled correctly. Then, when the rest reminder condition is reached, a corresponding overlay may pop up to remind the user to take a rest.

In addition, a setting page display control 3 is displayed on the reminder setting panel for facilitating management and setting by the user. When it is detected that the user triggers the setting page display control 3, it may be considered that the user performs the first trigger operation. Then, in this embodiment, the current page may be switched from the media content display page to the reminder setting page for detailed setting of the rest reminder information. When it is detected that the user clicks a "Cancel" control, the reminder setting panel may be closed.

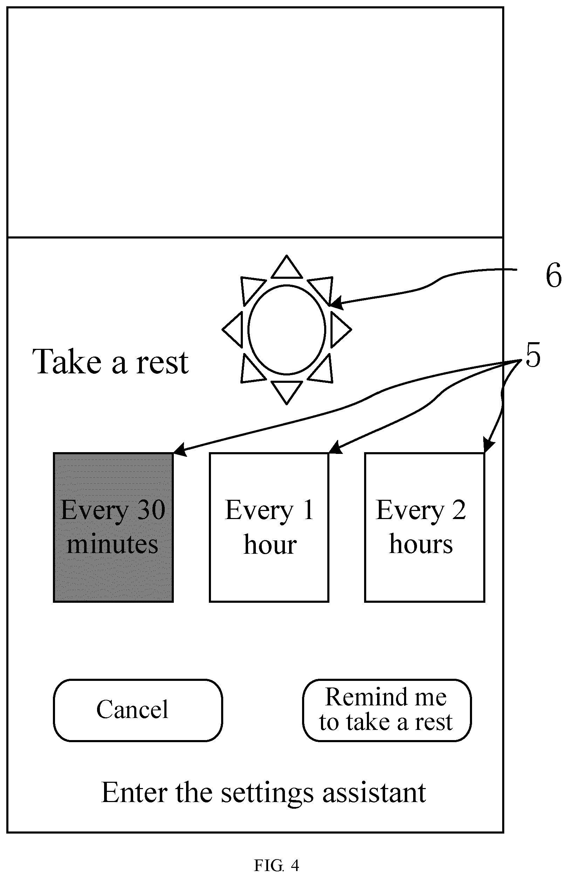

FIG. 4 is a schematic diagram of another reminder setting panel according to an embodiment of the present disclosure. As shown in FIG. 4, the reminder setting panel is displayed on the media content display page by using a display style corresponding to the day time period, where three reminder setting options 5 are displayed on the reminder setting panel. It can be found by comparing FIG. 3 with FIG. 4 that different time periods correspond to different display styles. For example, the panel background of the reminder setting panel in FIG. 3 is different from the panel background of the reminder setting panel in FIG. 4, and the display animation 4 in FIG. 3 is different from the display animation 6 in FIG. 4.

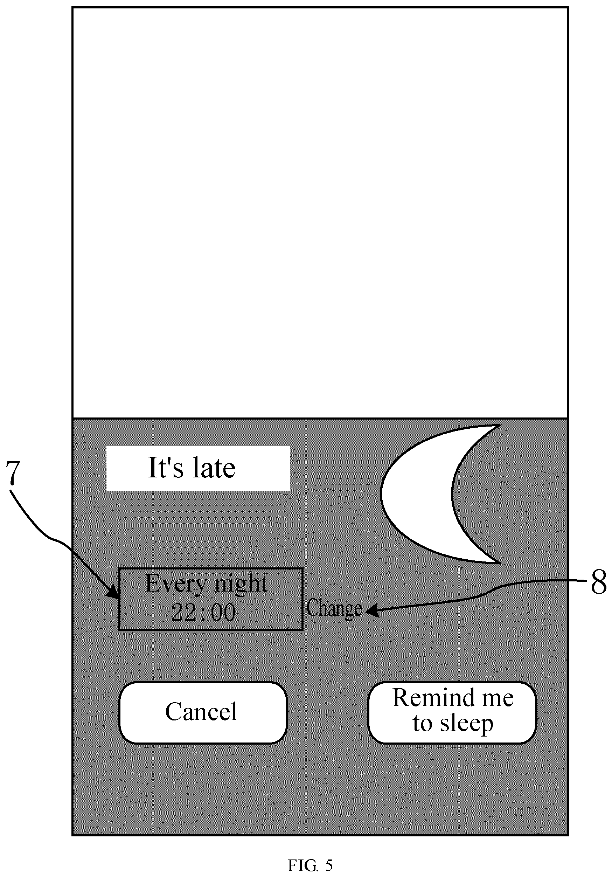

FIG. 5 is a schematic diagram of another reminder setting panel according to an embodiment of the present disclosure. As shown in FIG. 5, the reminder setting panel is displayed on the media content display page by using the display style corresponding to the night time period, where one reminder setting option 7 is displayed on the reminder setting panel. In addition, a setting page display control 8 is displayed on the reminder setting panel, which is used for switching the current page from the media content display page to the reminder setting page for detailed setting of the rest reminder information.

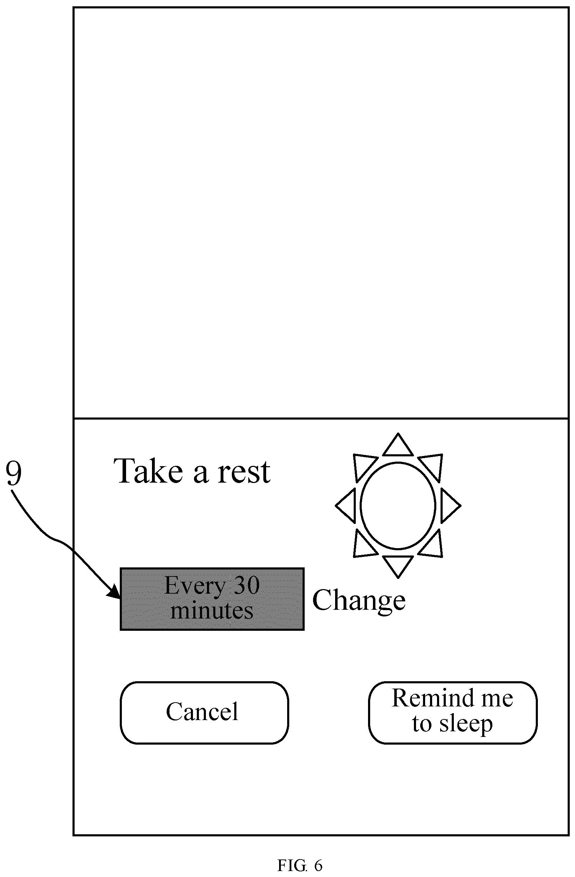

FIG. 6 is a schematic diagram of another reminder setting panel according to an embodiment of the present disclosure. As shown in FIG. 6, the reminder setting panel is displayed on the media content display page by using the display style corresponding to the day time period, where one reminder setting option 9 is displayed on the reminder setting panel. It can be found by comparing FIG. 5 with FIG. 6 that the panel background and the display animation of the reminder setting panel in FIG. 5 are also different from that of the reminder setting panel in FIG. 6.

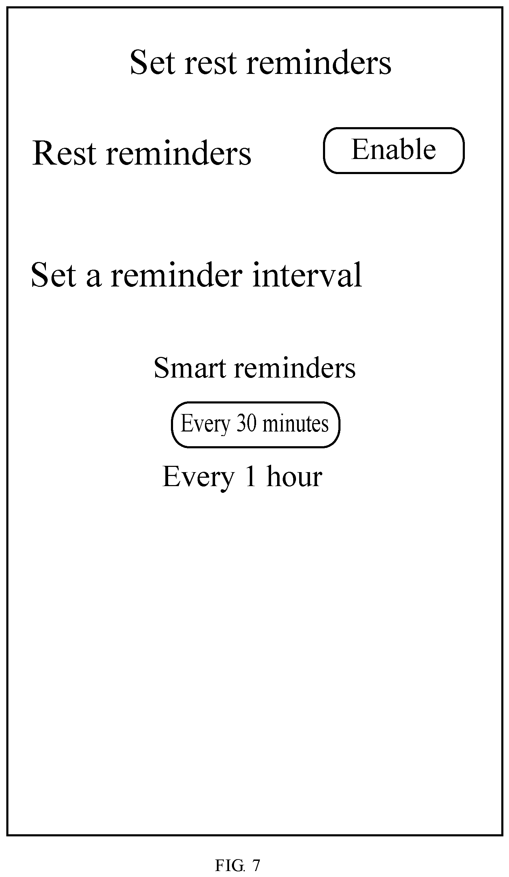

FIG. 7 is a schematic diagram of a reminder setting page according to an embodiment of the present disclosure. As shown in FIG. 7, the rest reminder information may be set on the reminder setting page, including, for example, whether to enable the rest reminder, setting the rest reminder condition (e.g., Set a reminder interval as shown in FIG. 7), and/or setting the rest reminder style (not shown in FIG. 7).

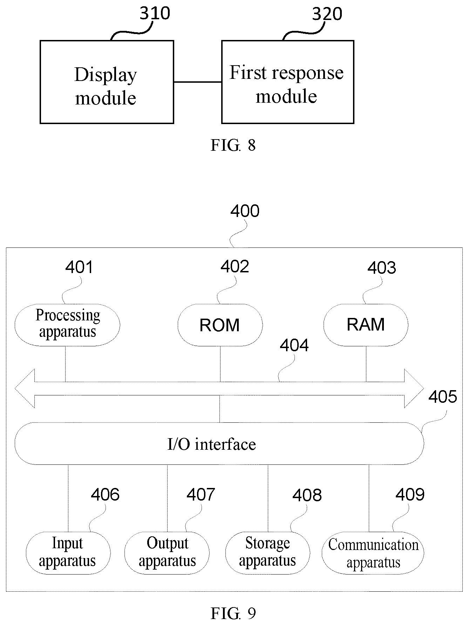

FIG. 8 is a schematic diagram of a structure of an interaction apparatus according to an embodiment of the present disclosure. The apparatus is applicable to a situation where a rest reminder is set when media content is displayed on a media content display page. The apparatus may be implemented by software and/or hardware, and is generally integrated into an electronic device.

As shown in FIG. 8, the apparatus includes:
a display module 310 configured to display a reminder setting panel on a media content display page, where the reminder setting panel is used for setting a rest reminder condition; and
a first response module 320 configured to switch a current page from the media content display page to a reminder setting page in response to a first trigger operation performed on the reminder setting panel, where the reminder setting page is used for setting rest reminder information, and the rest reminder information includes the rest reminder condition.

According to an interaction apparatus provided in this embodiment of the present disclosure, a reminder setting panel is displayed on a media content display page through a display module, where the reminder setting panel is used for setting a rest reminder condition; and a current page is switched from the media content display page to a reminder setting page through a first response module in response to a first trigger operation performed on the reminder setting panel, where the reminder setting page is used for setting rest reminder information, and the rest reminder information includes the rest reminder condition. According to this apparatus, it is possible to switch to the reminder setting page in response to the first trigger operation performed on the reminder setting panel, so as to set the rest reminder information on the reminder setting page, thereby simplifying an operation required for entering the reminder setting page to set the rest reminder information, and improving the interaction efficiency.

Optionally, the display module 310 is specifically configured to:
display the reminder setting panel on the media content display page by using a target display style, where the target display style is a display style corresponding to a current target time period, and different time periods correspond to different display styles.

Optionally, the display style includes at least one of a panel background and a display animation.

Optionally, a reminder setting option is displayed on the reminder setting panel, and the interaction apparatus provided in this embodiment of the present disclosure further includes:
a second response module configured to: after the displaying a reminder setting panel on a media content display page, use, in response to a setting confirmation operation performed on the reminder setting panel, a reminder condition corresponding to the reminder setting option displayed on the reminder setting panel as the rest reminder condition for a current user in a current target time period.

Optionally, at least two reminder setting options are displayed on the reminder setting panel, and the interaction apparatus provided in this embodiment of the present disclosure further includes:
a third response module configured to: after the displaying a reminder setting panel on a media content display page, use, in response to a setting confirmation operation performed on the reminder setting panel, a reminder condition corresponding to a reminder setting option that is selected by a current user on the reminder setting panel as the rest reminder condition for the current user in a current target time period.

Optionally, the first response module 320 is specifically configured to:
switch the current page from the media content display page to the reminder setting page corresponding to a current target time period, where the reminder setting page corresponding to the current target time period is used for setting the rest reminder information in the target time period.

Optionally, a setting page display control is displayed on the reminder setting panel, and the setting page display control is used for performing the first trigger operation.

Optionally, the reminder setting panel is displayed when a preset display condition is met, and the preset display condition includes that the rest reminder condition in the current target time period has not been set by the current user.

Optionally, an interaction apparatus provided in this embodiment of the present disclosure further includes:
a fourth response module configured to: after the switching a current page from the media content display page to a reminder setting page, switch the current page from the reminder setting page to the media content display page in response to a second trigger operation performed on the reminder setting page.

The above interaction apparatus may perform the interaction method provided in any one of the embodiments of the present disclosure, and has corresponding functional modules and beneficial effects for performing the method.

Reference is made to FIG. 9 below, which is a schematic diagram of a structure of an electronic device 400 suitable for implementing an embodiment of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 9 is merely an example, and shall not impose any limitation on the function and scope of use of the embodiments of the present disclosure.

As shown in FIG. 9, the electronic device 400 may include a processing apparatus (e.g., a central processing unit or a graphics processing unit) 401 that may perform a variety of appropriate actions and processing in accordance with a program stored in a read-only memory (ROM) 402 or a program loaded from a storage apparatus 408 into a random access memory (RAM) 403. The RAM 403 further stores various programs and data required for the operation of the electronic device 400. The processing apparatus 401, the ROM 402, and the RAM 403 are connected to one another through a bus 404. An input/output (I/O) interface 405 is also connected to the bus 404.

Generally, the following apparatuses may be connected to the I/O interface 405: an input apparatus 406 including, for example, a touchscreen, a touchpad, a keyboard, a mouse, a camera, a microphone, an accelerometer, and a gyroscope; an output apparatus 407 including, for example, a liquid crystal display (LCD), a speaker, and a vibrator; the storage apparatus 408 including, for example, a tape and a hard disk; and a communication apparatus 409. The communication apparatus 409 may allow the electronic device 400 to perform wireless or wired communication with other devices to exchange data. Although FIG. 9 shows the electronic device 400 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 409, installed from the storage apparatus 408, or installed from the ROM 402. When the computer program is executed by the processing apparatus 401, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: display a reminder setting panel on a media content display page, where the reminder setting panel is used for setting a rest reminder condition; and switch a current page from the media content display page to a reminder setting page in response to a first trigger operation performed on the reminder setting panel, where the reminder setting page is used for setting rest reminder information, and the rest reminder information includes the rest reminder condition.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed on the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides an interaction method, including:
displaying a reminder setting panel on a media content display page, where the reminder setting panel is used for setting a rest reminder condition; and
switching a current page from the media content display page to a reminder setting page in response to a first trigger operation performed on the reminder setting panel, where the reminder setting page is used for setting rest reminder information, and the rest reminder information includes the rest reminder condition.

According to one or more embodiments of the present disclosure, Example 2 provides the method according to Example 1, where the displaying a reminder setting panel on a media content display page includes:
displaying the reminder setting panel on the media content display page by using a target display style, where the target display style is a display style corresponding to a current target time period, and different time periods correspond to different display styles.

According to one or more embodiments of the present disclosure, Example 3 provides the method according to Example 2, where the display style includes at least one of a panel background and a display animation.

According to one or more embodiments of the present disclosure, Example 4 provides the method according to Example 1, where a reminder setting option is displayed on the reminder setting panel, and after the displaying a reminder setting panel on a media content display page, the method further includes:
using, in response to a setting confirmation operation performed on the reminder setting panel, a reminder condition corresponding to the reminder setting option displayed on the reminder setting panel as the rest reminder condition for a current user in a current target time period.

According to one or more embodiments of the present disclosure, Example 5 provides the method according to Example 1, where at least two reminder setting options are displayed on the reminder setting panel, and after the displaying a reminder setting panel on a media content display page, the method further includes:
using, in response to a setting confirmation operation performed on the reminder setting panel, a reminder condition corresponding to a reminder setting option that is selected by a current user on the reminder setting panel as the rest reminder condition for the current user in a current target time period.

According to one or more embodiments of the present disclosure, Example 6 provides the method according to Example 1, where the switching a current page from the media content display page to a reminder setting page includes:
switching the current page from the media content display page to the reminder setting page corresponding to a current target time period, where the reminder setting page corresponding to the current target time period is used for setting the rest reminder information in the target time period.

According to one or more embodiments of the present disclosure, Example 7 provides the method according to any one of Examples 1 to 6, where a setting page display control is displayed on the reminder setting panel, and the setting page display control is used for performing the first trigger operation.

According to one or more embodiments of the present disclosure, Example 8 provides the method according to any one of Examples 1 to 6, where the reminder setting panel is displayed when a preset display condition is met, and the preset display condition includes that the rest reminder condition in the current target time period has not been set by the current user.

According to one or more embodiments of the present disclosure, Example 9 provides the method according to any one of Examples 1 to 6, where after the switching a current page from the media content display page to a reminder setting page, the method further includes:
switching the current page from the reminder setting page to the media content display page in response to a second trigger operation performed on the reminder setting page.

According to one or more embodiments of the present disclosure, Example 10 provides an interaction apparatus, including:
a display module configured to display a reminder setting panel on a media content display page, where the reminder setting panel is used for setting a rest reminder condition; and
a first response module configured to switch a current page from the media content display page to a reminder setting page in response to a first trigger operation performed on the reminder setting panel, where the reminder setting page is used for setting rest reminder information, and the rest reminder information includes the rest reminder condition.

According to one or more embodiments of the present disclosure, Example 11 provides an electronic device, including:
one or more processors; and
a memory configured to store one or more programs, where
the one or more programs, when executed by the one or more processors, cause the one or more processors to implement the interaction method according to any one of Examples 1 to 9.

According to one or more embodiments of the present disclosure, Example 12 provides a computer-readable storage medium having a computer program stored thereon, where the program, when executed by a processor, causes the interaction method according to any one of Examples 1 to 9 to be implemented.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed on the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interaction method, comprising:
displaying a reminder setting panel on a media content display page, wherein the reminder setting panel is used for setting a rest reminder condition; and
switching a current page from the media content display page to a reminder setting page in response to a first trigger operation performed on the reminder setting panel, wherein the reminder setting page is used for setting rest reminder information, and the rest reminder information comprises the rest reminder condition.

2. The method according to claim 1, wherein the displaying a reminder setting panel on a media content display page comprises:
displaying the reminder setting panel on the media content display page by using a target display style, wherein the target display style is a display style corresponding to a current target time period, and different time periods correspond to different display styles.

3. The method according to claim 2, wherein the display style comprises at least one of a panel background and a display animation.

4. The method according to claim 1, wherein a reminder setting option is displayed on the reminder setting panel, and after the displaying a reminder setting panel on a media content display page, the method further comprises:
using, in response to a setting confirmation operation performed on the reminder setting panel, a reminder condition corresponding to the reminder setting option displayed on the reminder setting panel as the rest reminder condition for a current user in a current target time period.

5. The method according to claim 1, wherein at least two reminder setting options are displayed on the reminder setting panel, and after the displaying a reminder setting panel on a media content display page, the method further comprises:
using, in response to a setting confirmation operation performed on the reminder setting panel, a reminder condition corresponding to a reminder setting option that is selected by a current user on the reminder setting panel as the rest reminder condition for the current user in a current target time period.

6. The method according to claim 1, wherein the switching a current page from the media content display page to a reminder setting page comprises:
switching the current page from the media content display page to the reminder setting page corresponding to a current target time period, wherein the reminder setting page corresponding to the current target time period is used for setting the rest reminder information in the target time period.

7. The method according to any of claims 1 to 6, wherein a setting page display control is displayed on the reminder setting panel, and the setting page display control is used for performing the first trigger operation.

8. The method according to any of claims 1 to 6, wherein the reminder setting panel is displayed in response to a preset display condition being met, and the preset display condition comprises that a current user has not set the rest reminder condition in the current target time period.

9. The method according to any of claims 1 to 6, wherein after the switching a current page from the media content display page to a reminder setting page, the method further comprises:
switching the current page from the reminder setting page to the media content display page in response to a second trigger operation performed on the reminder setting page.

10. An interaction apparatus, comprising:
a display module configured to display a reminder setting panel on a media content display page, wherein the reminder setting panel is used for setting a rest reminder condition; and
a first response module configured to switch a current page from the media content display page to a reminder setting page in response to a first trigger operation performed on the reminder setting panel, wherein the reminder setting page is used for setting rest reminder information, and the rest reminder information comprises the rest reminder condition.

11. An electronic device, comprising:
at least one processor; and
a memory communicatively connected to the at least one processor, wherein
the memory stores a computer program executable by the at least one processor, and the computer program, when executed by the at least one processor, causes the at least one processor to perform the interaction method according to any of claims 1 to 9.

12. A computer-readable storage medium storing computer instructions that, when executed by a processor, cause the processor to perform the interaction method according to any of claims 1 to 9.
